# EUROPÄISCHE PATENTSCHRIFT

(11) **EP 3 460 290 B1**
(45) Veröffentlichungstag und Bekanntmachung des Hinweises auf die Patenterteilung: **03.11.2021**
(21) Anmeldenummer: 18193994.3
(22) Anmeldetag: 12.09.2018
(51) Int. Cl.: F16H 3/66, F16H 57/033

(54) **LASTSCHALTGETRIEBE ZUR ANBINDUNG AN EINEN ELEKTROMOTOR**
POWERSHIFT TRANSMISSION FOR CONNECTING TO AN ELECTRIC MOTOR
BOÎTE DE VITESSES AVEC COMMANDE SOUS CHARGE DESTINÉE À LA CONNEXION À UN MOTEUR ÉLECTRIQUE

(30) Priorität: 22.09.2017 DE 102017122022
(43) Veröffentlichungstag der Anmeldung: 27.03.2019
(73) Patentinhaber: MAN Truck & Bus SE, 80995 München (DE)
(72) Erfinder: Zieglmaier, Wolfgang, 85540 Haar (DE); Geißler, Josef, 80797 München (DE); Pirhalla, Maximilian, 80339 München (DE); Müller, Tobias, 80335 München (DE); Braykoff, Christo, 80997 München (DE); Moser, Klaus Johann, 80939 München (DE); Wirth, Christian, 85742 Moosinning (DE); Döppner, Enrico, 80809 München (DE); Perez, Marc, 80937 München (DE); Garcia, Adrian, 30400 Caravaca de la Cruz (ES)
(74) Vertreter: v. Bezold & Partner Patentanwälte - PartG mbB

(56) Entgegenhaltungen:
- EP-A2- 0 775 847
- EP-A2- 1 091 143
- DE-A1-102016 202 723
- DE-A1-102016 202 726
- Thomas Belz: "Varianten von Mehrgang-Planetengetrieben", , 8 March 2016 (2016-03-08), XP055257458, Retrieved from the Internet: URL:https://register.epo.org/application?d ocumentId=EYPWMGE67270DSU&appnumber=EP1375 6488&showPdfPage=all [retrieved on 2016-03-11]

## Beschreibung

Die Erfindung betrifft ein Lastschaltgetriebe für einen Antriebsstrang mit einem Elektromotor eines Kraftfahrzeugs, insbesondere Nutzfahrzeugs.

Unter anderem im Bereich des Nutzfahrzeugbaus erfordert die Umstellung von konventionellen Antrieben mit Verbrennungstechnologie auf neuartige Antriebstechnologien mit Elektromotor(en) eine Neukonzeption des Antriebsstrangs des Nutzfahrzeugs. Die Antriebsstränge müssen unterschiedliche Anforderungen erfüllen und beispielsweise an die Drehzahlbereiche des oder der verwendeten Elektromotoren angepasst sein.

Die DE 1 555 071 A1 offenbart eine Kraftübertragungseinrichtung für Fahrzeuge. Die Kraftübertragungseinrichtung weist eine Antriebswelle und eine Abtriebswelle auf. Ein erster, zweiter und dritter Planetensatz sind in axialen Abständen voneinander angeordnet. Ein gemeinsamer Planetenträger überspannt die beiden Wellen und trägt die Planetensätze. Ferner sind Steuereinrichtungen zur wahlweisen Verbindung der Antriebswelle mit der Abtriebswelle mit einem von dem Planetensätzen hergeleiteten Drehzahlverhältnis vorgesehen.

Die DE 10 2015 016 010 A1 offenbart eine Antriebsstrangvorrichtung mit zumindest einem Elektromotor und einem für den Elektromotor vorgesehenen Getriebe. Das Getriebe weist zumindest eine erste Planetengetriebestufe und eine zweite Planetengetriebestufe mit insgesamt höchstens vier Verzahnungsebenen und drei Bremseinheiten auf. Die Planetengetriebestufen und die Bremseinheiten sind konstruktiv zumindest zur Schaltung von drei zumindest teilweise sequentiell lastschaltbaren Vorwärtsgetriebegängen vorgesehen.

Die DE 10 2004 031 463 A1 offenbart ein Lastschaltgetriebe. Das Lastschaltgetriebe ist zwischen einer Antriebswelle und einer Abtriebswelle angeordnet. Das Lastschaltgetriebe beinhaltet zwei Teilgetriebeblöcke. Ein Vorschaltgetriebe, das von der Antriebswelle angetrieben wird, weist mindestens zwei weitere Wellen auf, von denen eine langsame Vorschaltwelle langsamer dreht als die Antriebswelle, und eine schnelle Vorschaltwelle schneller dreht als die Antriebswelle. Ein Überlagerungsgetriebe weist mindestens drei Wellen auf, von denen eine abtriebsseitige Überlagerungswelle mit der Abtriebswelle in Verbindung steht, von denen eine Abstützwelle mit dem Getriebegehäuse oder einer der Wellen des Vorschaltgetriebes verbindbar ist und von denen eine Hauptkoppelwelle mit der Antriebswelle und mindestens zwei Wellen des Vorschaltgetriebes verbindbar ist.

Die DE 10 2016 202726 A1 bezieht sich auf eine Schaltgetriebeeinrichtung umfassend ein erstes Umlaufräderteilgetriebe mit einem ersten Sonnenrad, einem ersten Planetensatz, einem ersten Planetenträger und einem ersten Hohlrad und ein zweites Umlaufräderteilgetriebe mit einem zweiten Sonnenrad, einem zweiten Planetensatz, einem zweiten Planetenträger und einem zweiten Hohlrad. Eine erste Kupplungseinrichtung ist zur selektiven Koppelung des ersten Planetenträgers mit dem zweiten Planetenträger angeordnet. Eine zweite Kupplungseinrichtung ist zur selektiven Koppelung des ersten Sonnenrades mit dem zweiten Sonnenrad angeordnet. Eine dritte Kupplungseinrichtung ist zur selektiven Koppelung des zweiten Planetenträgers mit einer stationären Struktur angeordnet. Eine vierte Kupplungseinrichtung ist zur selektiven Koppelung des ersten Planetenträgers mit dem zweiten Sonnenrad angeordnet. Das zweite Hohlrad ist als ein Getriebeausgangselement angeordnet.

Die EP 1 091 143 A2 offenbart einen Antriebsstrang mit einem Mehrgang-Kraftübertragungssystem, das zwei Planetengetriebe, vier Reibungsmechanismen und eine wahlweise betätigbare mechanische Antriebsverbindung enthält, die so gesteuert werden, dass fünf Vorwärtsgänge, eine neutrale Bedingung und ein Rückwärtsgang bereitgestellt werden. Das Hohlrad des zweiten Planetengetriebes ist als ein Getriebeausgangselement angeordnet.

Der Erfindung liegt die Aufgabe zu Grunde, ein verbessertes oder alternatives Lastschaltgetriebe zu schaffen, das insbesondere einen einfachen Aufbau und eine geringe Teileanzahl aufweist. Insbesondere sollen aus dem Lastschaltgetriebe verschiedene Varianten mit unterschiedlich vielen Gängen ableitbar sein, wobei möglichst viele Gleichteile verwendet werden sollen. Vorzugsweise soll ein Lastschaltgetriebe geschaffen werden, mit dem bis zu drei Gänge geschaltet werden können.

Die Aufgabe wird gelöst durch ein Lastschaltgetriebe gemäß dem unabhängigen Anspruch. Vorteilhafte Weiterbildungen sind in den abhängigen Ansprüchen und der Beschreibung angegeben.

Das Lastschaltgetriebe ist für einen Antriebsstrang mit einem Elektromotor eines Kraftfahrzeugs, insbesondere Nutzfahrzeugs, geeignet. Das Lastschaltgetriebe weist höchstens (genau) zwei seriell angeordnete Planetengetriebestufen mit einer ersten Planetengetriebestufe und einer zweiten Planetengetriebestufe auf. Das Lastschaltgetriebe weist ein erstes Lastschaltelement, das zum selektiven Verbinden der ersten Planetengetriebestufe und der zweiten Planetengetriebestufe über einen ersten Antriebspfad angeordnet ist, auf. Das Lastschaltgetriebe weist ein Umschaltelement, das zum selektiven Verbinden der ersten Planetengetriebestufe und der zweiten Planetengetriebestufe über einen zweiten Antriebspfad oder einen dritten Antriebspfad angeordnet ist, auf.

Die Merkmale des obigen Getriebes ermöglichen mit nur wenigen Elementen den Aufbau eines lastschaltbaren 3-Gang-Getriebes. Insbesondere werden nur zwei Planetengetriebestufen verwendet, wodurch nur wenig Bauraum benötigt wird. Zusätzlich ermöglicht das Lastschaltgetriebe eine modulare Bauweise zum Ableiten eines Zwei-Gang-Getriebes und eines Ein-Gang-Getriebes.

Insbesondere kann der erste Antriebspfad eine erste Welle, die eine Wirkverbindung zwischen der ersten Planetengetriebestufe und dem ersten Lastschaltelement herstellt, und/oder eine zweite Welle, die eine Wirkverbindung zwischen dem ersten Lastschaltelement und der zweiten Planetengetriebestufe herstellt, aufweisen.

Vorzugsweise können der zweite Antriebspfad und der dritte Antriebspfad eine gemeinsame erste Welle aufweisen, die eine Wirkverbindung zwischen der ersten Planetengetriebestufe und dem Umschaltelement herstellt.

Bevorzugt kann der zweite Antriebspfad eine zweite Welle aufweisen, die eine Wirkverbindung zwischen dem Umschaltelement und der zweiten Planetengetriebestufe herstellt. Beispielsweise kann die zweite Welle des zweiten Antriebspfads der zweiten Welle des ersten Antriebspfads entsprechen.

Beispielsweise kann der dritte Antriebspfad eine zweite Welle aufweisen, die eine Wirkverbindung zwischen dem Umschaltelement und der zweiten Planetengetriebestufe herstellt. Die zweite Welle des dritten Antriebspfads unterscheidet sich von der zweiten Welle des zweiten Antriebspfads.

Gemäß Anspruch 1 weist das Lastschaltgetriebe ferner ein zweites Lastschaltelement zum selektiven Festlegen einer Komponente, insbesondere eines Hohlrads, der ersten Planetengetriebestufe an einem Gehäuse des Lastschaltgetriebes auf. Dies hat den Vorteil, dass das Hohlrad der ersten Planetengetriebestufe am Gehäuse festgelegt werden kann, wenn über das Hohlrad ein Moment am Gehäuse abgestützt werden soll. Dies kann beispielsweise der Fall sein, wenn die erste Planetengetriebestufe und die zweite Planetengetriebestufe über den zweiten Antriebspfad oder den dritten Antriebspfad verbunden sind und das erste Lastschaltelement geöffnet ist.

In einer Ausführungsform verbindet das Umschaltelement in einer ersten Schaltstellung die erste Planetengetriebestufe und die zweite Planetengetriebestufe über den zweiten Antriebspfad. Damit kann ein Momentenfluss durch das Lastschaltgetriebe über den zweiten Antriebspfad erfolgen.

In einer weiteren Ausführungsform verbindet das Umschaltelement in einer zweiten Schaltstellung die erste Planetengetriebestufe und die zweite Planetengetriebestufe über den dritten Antriebspfad. Somit kann ein Momentenfluss durch das Lastschaltgetriebe über den dritten Antriebspfad erfolgen.

In einer weiteren Ausführungsform verbindet das Umschaltelement in einer dritten Schaltstellung, insbesondere einer Neutralstellung, die erste Planetengetriebestufe und die zweite Planetengetriebestufe weder über den zweiten Antriebspfad noch über den dritten Antriebspfad. Dies ermöglicht eine Schaltung des Momentenflusses durch das Lastschaltgetriebe über den ersten Antriebspfad.

In einer Weiterbildung ist das Umschaltelement in der dritten Schaltstellung, wenn die erste Planetengetriebestufe und die zweite Planetengetriebestufe über den ersten Antriebspfad verbunden sind.

Vorzugsweise ist die dritte Schaltstellung eine unbelastete Neutralstellung des Umschaltelements.

In einem Ausführungsbeispiel verbindet der erste Antriebspfad ein Sonnenrad der ersten Planetengetriebestufe, insbesondere direkt, mit einem Sonnenrad der zweiten Planetengetriebestufe.

In einem weiteren Ausführungsbeispiel verbindet der zweite Antriebspfad einen Planetenträger der ersten Planetengetriebestufe, insbesondere direkt, mit einem Sonnenrad der zweiten Planetengetriebestufe.

In einem weiteren Ausführungsbeispiel verbindet der dritte Antriebspfad einen Planetenträger der ersten Planetengetriebestufe, insbesondere direkt, mit einem Planetenträger der zweiten Planetengetriebestufe.

In einer Ausführungsvariante ist ein Hohlrad der zweiten Planetengetriebestufe an einem Gehäuse des Lastschaltgetriebes festgelegt. Damit kann über das Hohlrad der zweiten Planetengetriebestufe ein Moment an dem Gehäuse abgestützt werden.

In einer bevorzugten Ausführungsvariante ist das Umschaltelement als eine Doppelklauenkupplung ausgebildet.

In weiteren Ausführungsvarianten ist das erste Lastschaltelement als eine Lamellenkupplung ausgebildet, das zweite Lastschaltelement als eine Lamellenbremse ausgebildet und/oder das Umschaltelement nicht-lastschaltbar ausgebildet.

Gemäß Anspruch 1 bildet ein Sonnenrad der ersten Planetengetriebestufe ein Getriebeeingangselement des Lastschaltgetriebes aus, das an den Elektromotor anbindbar ist. Des Weiteren bildet gemäß Anspruch 1 ein Planetenträger der zweiten Planetengetriebestufe ein Getriebeausgangselement des Lastschaltgetriebes aus, das an ein Achsgetriebe des Antriebsstrangs anbindbar ist.

In einer bevorzugten Ausführungsform ist das Lastschaltgetriebe konstruktiv zur Schaltung von höchstens drei lastschaltbaren Vorwärtsgängen vorgesehen.

Insbesondere können die drei Vorwärtsgänge über die drei Antriebspfade des Lastschaltgetriebes dargestellt werden.

Es ist möglich, dass die erste Planetengetriebestufe und/oder die zweite Planetengetriebestufe als ein Einzelplanetengetriebe (Planetengetriebe mit einfachem Umlaufradsatz), ein Doppelplanetengetriebe, ein Stufenplanetengetriebe oder ein Ravigneaux-Planetengetriebe ausgebildet ist.

Vorzugsweise kann das Lastschaltgetriebe genau zwei Verzahnungsebenen aufweisen, wobei die erste Planetengetriebestufe und die zweite Planetengetriebestufe jeweils eine Verzahnungsebene aufweisen.

In einem besonders bevorzugten Ausführungsbeispiel ist das Lastschaltgetriebe modular zum Aufbau eines Getriebes mit einem Vorwärtsgang, eines Getriebes mit zwei lastschaltbaren Vorwärtsgängen und/oder eines Getriebes mit drei lastschaltbaren Vorwärtsgängen vorgesehen. Der modulare Aufbau ermöglicht ein Modulbausystem, mit dem durch die Verwendung von möglichst vielen Gleichteilen Produktionskosten durch Skaleneffekte verringert werden können.

Vorzugsweise kann das Getriebe mit zwei Vorwärtsgängen aus dem Getriebe mit drei Vorwärtsgängen durch Weglassen des Umschaltelements und des dritten Antriebspfads abgeleitet werden. Die zwei Gänge können dann über den ersten Antriebspfad und den zweiten Antriebspfad dargestellt werden.

Bevorzugt kann das Getriebe mit einem Vorwärtsgang aus dem Getriebe mit zwei Vorwärtsgängen durch Weglassen der ersten Planetengetriebestufe, des ersten Lastschaltelements, des zweiten Lastschaltelements und des zweiten Antriebspfads abgeleitet werden. Der eine Gang kann dann über den ersten Antriebspfad oder über den zweiten Antriebspfad dargestellt werden.

Es ist auch möglich, das Getriebe mit einem Vorwärtsgang aus dem Getriebe mit drei Vorwärtsgängen durch Weglassen der ersten Planetengetriebestufe, des ersten Lastschaltelements, des zweiten Lastschaltelements, des Umschaltelements, des zweiten Antriebspfads und des dritten Antriebspfads abzuleiten.

Die Erfindung betrifft auch einen Antriebsstrang mit einem Elektromotor, der antreibend mit einem Lastschaltgetriebe wie hierin offenbart verbunden ist, das wiederum antreibend mit einem Achsgetriebe verbunden ist.

Zusätzlich betrifft die Erfindung ein Kraftfahrzeug, insbesondere Nutzfahrzeug (zum Beispiel Omnibus oder Lastkraftwagen). Das Kraftfahrzeug weist ein Achsgetriebe, ein Lastschaltgetriebe wie hierin offenbart, das antreibend mit dem Achsgetriebe verbunden ist, und einen Elektromotor, der antreibend mit dem Lastschaltgetriebe verbunden ist, auf.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Prinzipskizze eines Antriebsstrangs mit einem Lastschaltgetriebe;
- Figur 2: eine Prinzipskizze eines Lastschaltgetriebes;
- Figur 3: eine Konstruktionszeichnung des Lastschaltgetriebes:
- Figur 4: eine Prinzipskizze des Lastschaltgetriebes mit eingezeichnetem Momentenfluss bzw. Momentenübertragungsweg gemäß einem ersten Gang;
- Figur 5: eine Prinzipskizze des Lastschaltgetriebes mit eingezeichnetem Momentenfluss gemäß einem zweiten Gang;
- Figur 6: eine Prinzipskizze des Lastschaltgetriebes mit eingezeichnetem Momentenfluss gemäß einem dritten Gang;
- Figur 7: eine Prinzipskizze einer Zwei-Gang-Variante eines modularen Lastschaltgetriebes;
- Figur 8: eine Prinzipskizze einer Ein-Gang-Variante des modularen Lastschaltgetriebes;
- Figur 9: eine Prinzipskizze eines Lastschaltgetriebes gemäß einem weiteren Ausführungsbeispiel; und
- Figur 10: eine Prinzipskizze eines Lastschaltgetriebes gemäß einem weiteren Ausführungsbeispiel.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

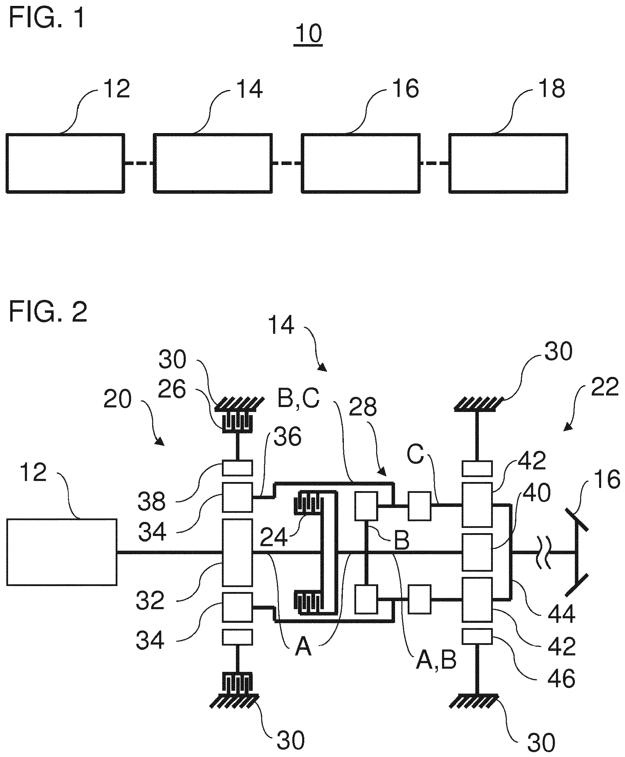

Die Figur 1 zeigt einen Antriebsstrang 10. Der Antriebsstrang 10 kann insbesondere in einem Nutzfahrzeug, zum Beispiel einem Lastkraftwagen oder einem Omnibus, verwendet werden. Der Antriebsstrang 10 weist einen Elektromotor 12, ein Lastschaltgetriebe 14, ein Achsgetriebe 16 und Räder 18 auf. Der Elektromotor 12 ist antreibend mit dem Lastschaltgetriebe 14 verbunden. Das Lastschaltgetriebe 14 ist antreibend mit dem Achsgetriebe 16 verbunden. Das Achsgetriebe 16 ist antreibend mit den Rädern 18 verbunden.

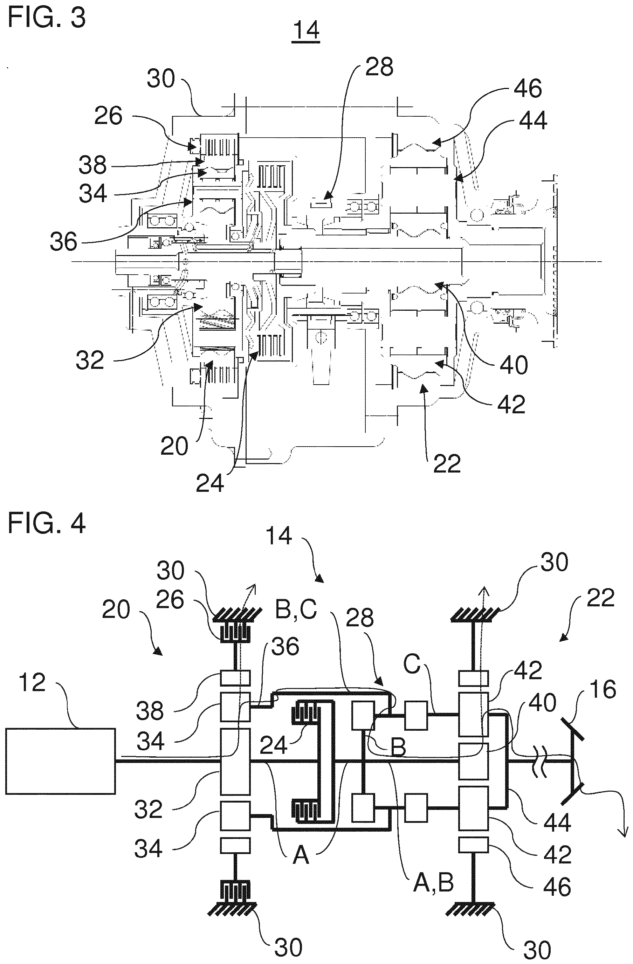

Die Figuren 2 und 3 zeigen einen Aufbau des Lastschaltgetriebes 14. Das Lastschaltgetriebe 14 weist eine erste Planetengetriebestufe 20, eine zweite Planetengetriebestufe 22, ein erstes Lastschaltelement 24, ein zweites Lastschaltelement 26, ein Umschaltelement 28 und ein Gehäuse 30 auf.

Die erste Planetengetriebestufe 20 weist ein Sonnenrad 32, Planetenräder 34, einen Planetenträger (Steg) 36 und ein Hohlrad 38 auf.

Das Sonnenrad 32 ist ein Getriebeeingangselement des Lastschaltgetriebes 14. Der Elektromotor 12 ist antreibend mit dem Sonnenrad 32 verbunden. Die Planetenräder 34 kämmen mit dem Sonnenrad 32 und dem Hohlrad 38. Der Planetenträger 36 trägt die Planetenräder 34. Die Planetenräder 34 können innerhalb des Hohlrads 38 um das Sonnenrad 32 rotieren und den Planetenträger 36 drehen. Das Hohlrad 38 kann über das zweite Lastschaltelement 26 an dem Gehäuse 30 festgelegt werden. Das zweite Lastschaltelement 26 kann beispielsweise eine Lamellenkupplung sein, die als Bremse wirkt.

Die zweite Planetengetriebestufe 22 weist ein Sonnenrad 40, Planetenrädern 42, einen Planetenträger (Steg) 44 und ein Hohlrad 46 auf.

Der Planetenträger 44 ist ein Getriebeausgangselement des Lastschaltgetriebes 14. Der Planetenträger 44 ist antreibend mit dem Achsgetriebe 16 zum Antreiben der Räder 18 (siehe Figur 1) verbunden. Die Planetenräder 42 kämmen mit dem Sonnenrad 40 und dem Hohlrad 46. Der Planetenträger 44 trägt die Planetenräder 42. Die Planetenräder 42 können innerhalb des Hohlrads 46 um das Sonnenrad 40 rotieren und den Planetenträger 44 drehen. Das Hohlrad 46 ist am Gehäuse 30 festgelegt.

In der Figur 2 ist gezeigt, dass die erste Planetengetriebestufe 20 und die zweite Planetengetriebestufe 22 über einen von drei möglichen Antriebspfaden A, B, C miteinander verbunden werden können.

Ein erster Antriebspfad A verbindet das Sonnenrad 32 der ersten Planetengetriebestufe 20 mit dem Sonnenrad 40 der zweiten Planetengetriebestufe 22. Der erste Antriebspfad A weist das erste Lastschaltelement 24 auf. Das erste Lastschaltelement 24 kann beispielsweise als eine Lamellenkupplung ausgebildet sein. Ist das erste Lastschaltelement 24 in Eingriff, so ist das Sonnenrad 32 antreibend mit dem Sonnenrad 40 verbunden. Ist das erste Lastschaltelement 24 außer Eingriff, so ist das Sonnenrad 32 nicht antreibend mit dem Sonnenrad 40 verbunden.

Ein zweiter Antriebspfad B verbindet den Planetenträger 36 der ersten Planetengetriebestufe 20 mit dem Sonnenrad 40 der zweiten Planetengetriebestufe 22. Ein dritter Antriebspfad C verbindet den Planetenträger 36 der ersten Planetengetriebestufe 20 mit dem Planetenträger 44 der zweiten Planetengetriebestufe 22.

Der zweite Antriebspfad B und der dritte Antriebspfad C weisen das Umschaltelement 28 auf. Das Umschaltelement 28 kann beispielsweise als eine Doppelklauenkupplung oder als Kombination von zwei parallel vorgesehenen Klauenkupplungen ausgebildet sein. Das Umschaltelement 28 kann eine erste Schaltstellung, eine zweite Schaltstellung und eine dritte Schaltstellung (Neutralstellung) einnehmen.

In der ersten Schaltstellung kann eine Kupplungsmuffe des Umschaltelements 28 in einer ersten Richtung (nach links in Figur 2) verschoben werden und damit eine erste Klauenkupplung in Eingriff bringen. In der ersten Schaltstellung des Umschaltelements 28 ist die erste Planetengetriebestufe 20 über den zweiten Antriebspfad B antreibend mit der zweiten Planetengetriebestufe 22 verbunden.

In der zweiten Schaltstellung kann die Kupplungsmuffe in einer zweiten, entgegengesetzten Richtung (nach rechts in Figur 2) verschoben werden und damit eine zweiten Klauenkupplung in Eingriff bringen. In der zweiten Schaltstellung des Umschaltelements 28 ist die erste Planetengetriebestufe 20 über den dritten Antriebspfad C antreibend mit der zweiten Planetengetriebestufe 22 verbunden.

In der Neutralstellung ist die Kupplungsmuffe des Umschaltelements 28 mittig zwischen der ersten und zweiten Klauenkupplung positioniert und weder die erste Klauenkupplung noch die zweite Klauenkupplung ist in Eingriff. In der Neutralstellung des Umschaltelements 28 ist die erste Planetengetriebestufe 20 weder über den zweiten Antriebspfad B noch über den dritten Antriebspfad C mit der zweiten Planetengetriebestufe 22 verbunden.

Im Einzelnen ist der Planetenträger 36 antreibend mit dem Sonnenrad 40 über den zweiten Antriebspfad B verbunden, wenn das Umschaltelement 28 in der ersten Schaltstellung ist. In der zweiten Schaltstellung des Umschaltelements 28 ist der Planetenträger 36 antreibend mit dem Planetenträger 44 verbunden. In der Neutralstellung des Umschaltelements 28 ist der Planetenträger 36 über das Umschaltelement 28 nicht antreibend mit der zweiten Planetengetriebestufe 22 verbunden.

Das Lastschaltgetriebe 14 ist konstruktiv zur Schaltung von drei lastschaltbaren (Vorwärts-) Gängen vorgesehen. Nachfolgend sind die Momentenflüsse für die drei lastschaltbaren Gänge des Lastschaltgetriebes 14 unter Bezugnahme auf die Figuren 4 bis 6 beschrieben.

Die Figur 4 zeigt einen Momentenfluss in einem ersten Gang des Lastschaltgetriebes 14. Das erste Lastschaltelement 24 ist geöffnet. Das zweite Lastschaltelement 26 ist geschlossen, sodass ein Moment am Gehäuse 30 abgestützt werden kann. Das Umschaltelement 28 befindet sich in der ersten Schaltstellung (linke Position in Figur 4). Das über das Sonnenrad 32 eingeleitete Moment wird über die Planetenräder 34 und den Planetenträger 36 zu dem Umschaltelement 28 geleitet. Das Umschaltelement 28 leitet das Moment zu dem Sonnenrad 40. Von dem Sonnenrad 40 wird das Moment über die Planetenräder 42 zu dem Planetenträger 44 geleitet. Der Planetenträger 44 leitet das Moment aus dem Lastschaltgetriebe 14 in Richtung zu dem Achsgetriebe 16. Im ersten Gang erfolgt der Momentenfluss über den zweiten Antriebspfad B, d. h., die erste Planetengetriebestufe 20 ist mit der zweiten Planetengetriebestufe 22 über den zweiten Antriebspfad B verbunden.

Zur Schaltung vom ersten Gang in einen zweiten Gang wird das erste Lastschaltelement 24 geschlossen und gleichzeitig das zweite Lastschaltelement 26 geöffnet. Zur Schaltung vom zweiten Gang in den ersten Gang wird das erste Lastschaltelement 24 geöffnet und gleichzeitig das zweite Lastschaltelement 26 geschlossen.

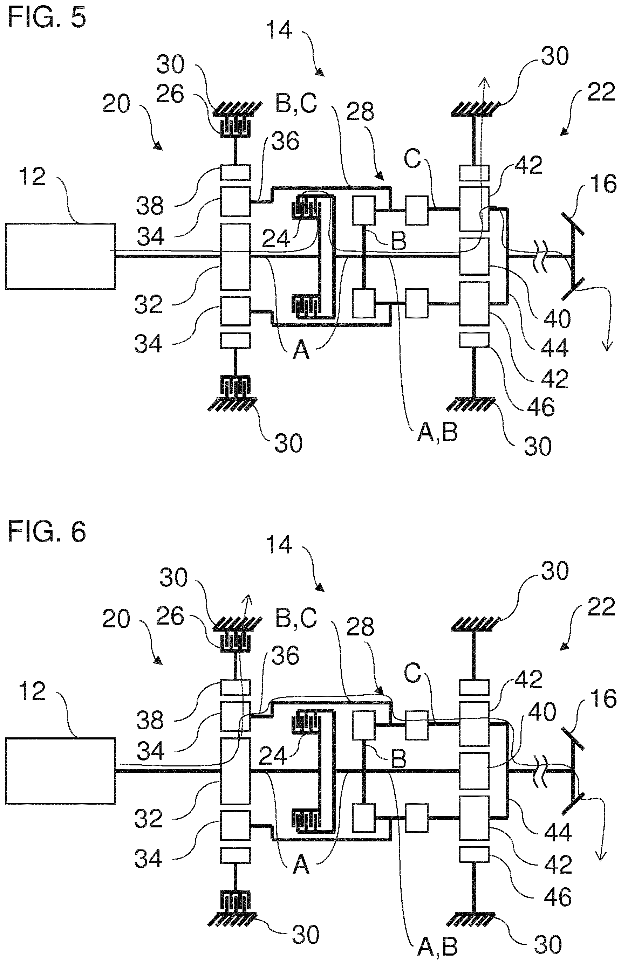

Die Figur 5 zeigt einen Momentenfluss in dem zweiten Gang des Lastschaltgetriebes 14. Das erste Lastschaltelement 24 ist geschlossen. Das zweite Lastschaltelement 26 ist geöffnet. Das Umschaltelement 28 ist unbelastet und somit in der Neutralstellung. Der Momentenfluss erfolgt über das Sonnenrad 32, das erste Lastschaltelement 24, das Sonnenrad 40 und die Planetenräder 42 zu dem Planetenträger 44. Der Abtrieb erfolgt über den Planetenträger 44. Im zweiten Gang erfolgt der Momentenfluss über den ersten Antriebspfad A, d. h., die erste Planetengetriebestufe 20 ist mit der zweiten Planetengetriebestufe 22 über den ersten Antriebspfad A verbunden.

Eine Schaltung von dem zweiten Gang in einen dritten Gang wird durch Verschiebung des Umschaltelements 28 in die zweite Schaltstellung (nach rechts in Figur 5) vorbereitet. Zur Schaltung vom zweiten Gang in den dritten Gang wird das erste Lastschaltelement 24 geöffnet und gleichzeitig das zweite Lastschaltelement 26 geschlossen.

Die Figur 6 zeigt einen Momentenfluss im dritten Gang des Lastschaltgetriebes 14. Das erste Lastschaltelement 24 ist geöffnet. Das zweite Lastschaltelement 26 ist geschlossen, sodass ein Moment am Gehäuse 30 abgestützt werden kann. Das Umschaltelement 28 ist in der zweiten Schaltstellung (rechte Position in Figur 6). Der Momentenfluss erfolgt über das Sonnenrad 32, die Planetenräder 34, den Planetenträger 36 und das Umschaltelement 28 zu dem Planetenträger 44. Der Abtrieb erfolgt über den Planetenträger 44. Im dritten Gang erfolgt der Momentenfluss über den dritten Antriebspfad C, d. h., die erste Planetengetriebestufe 20 ist mit der zweiten Planetengetriebestufe 22 über den dritten Antriebspfad C verbunden.

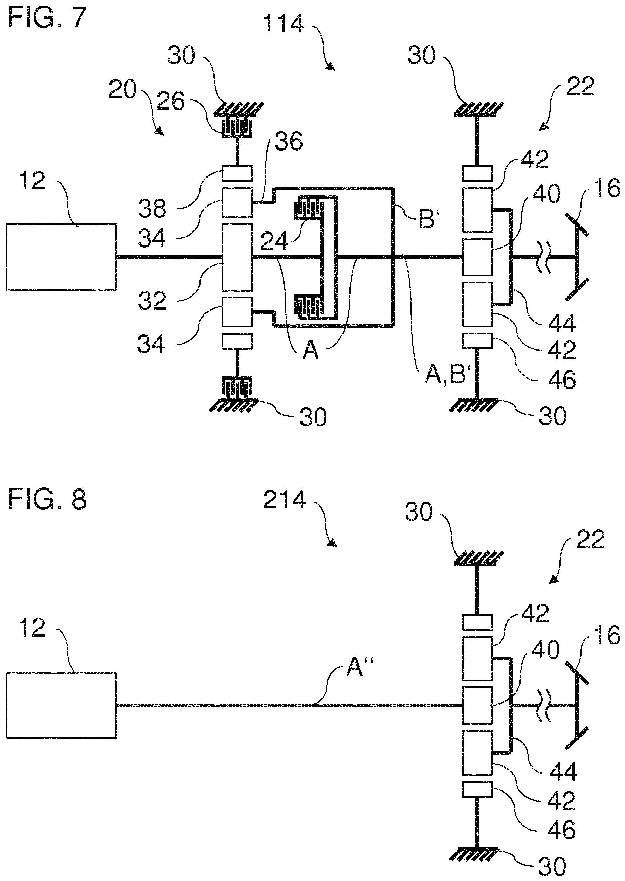

In einer besonders bevorzugten Ausführungsvariante ist das Lastschaltgetriebe 14 modular aufgebaut. Der modulare Aufbau ermöglicht die Ableitung eines lastschaltbaren Zwei-Gang-Getriebes und eines Ein-Gang-Getriebes. In Figur 7 ist das lastschaltbare Zwei-Gang-Getriebe dargestellt. In Figur 8 ist das Ein-Gang-Getriebe dargestellt. Der modulare Aufbau ermöglicht die Verwendung vieler Gleichteile, sodass Produktionskosten eingespart werden können. Als Gleichteile kommen insbesondere die erste Planetengetriebestufe 20, die zweite Planetengetriebestufe 22, das erste Lastschaltelement 24 und das zweite Lastschaltelement 26 in Frage.

Die Figur 7 zeigt ein Lastschaltgetriebe 114, das aus dem Lastschaltgetriebe 14 (siehe Figuren 1 bis 6) ableitbar ist, wenn das Lastschaltgetriebe 14 modular konstruiert ist. Im Gegensatz zum Lastschaltgetriebe 14 weist das Lastschaltgetriebe 114 kein Umschaltelement 28 auf. Stattdessen verbindet der zweite Antriebspfad B' des Lastschaltgetriebes 114 den Planetenträger 36 der ersten Planetengetriebestufe 20 direkt mit dem Sonnenrad 40 der zweiten Planetengetriebestufe 22. Das Lastschaltgetriebe 114 weist den zuvor beschriebenen ersten Gang und den zuvor beschriebenen zweiten Gang des Lastschaltgetriebes 14 auf.

Das Lastschaltgetriebe 114 aus Figur 7 und das Lastschaltgetriebe 14 aus den Figuren 1 bis 6 weisen als Gleichteile die erste Planetengetriebestufe 20, die zweite Planetengetriebestufe 22, das erste Lastschaltelement 24 und das zweite Lastschaltelement 26 auf.

Die Figur 8 zeigt ein Getriebe 214, das aus dem Lastschaltgetriebe 14 (siehe Figuren 1 bis 6) oder aus dem Lastschaltgetriebe 114 (siehe Figur 7) ableitbar ist, wenn die Lastschaltgetriebe 14 und 114 modular konstruiert sind. Im Gegensatz zum Lastschaltgetriebe 14 weist das Getriebe 214 keine erste Planetengetriebestufe 20, kein erstes Lastschaltelement 24, kein zweites Lastschaltelement 26 und kein Umschaltelement 28 auf. Im Gegensatz zum Lastschaltgetriebe 114 weist das Getriebe 214 keine erste Planetengetriebestufe 20, kein erstes Lastschaltelement 24 und kein zweites Lastschaltelement 26 auf. Stattdessen ist der Elektromotor 12 direkt über den ersten Antriebspfad A" mit der zweiten Planetengetriebestufe 22 verbunden. Das Getriebe 214 weist den zuvor beschriebenen zweiten Gang des Lastschaltgetriebes 14 auf.

Das Getriebe 214 aus Figur 8 und die Lastschaltgetriebe 14 und 114 aus den Figuren 1 bis 7 weisen als Gleichteile die zweite Planetengetriebestufe 22 auf.

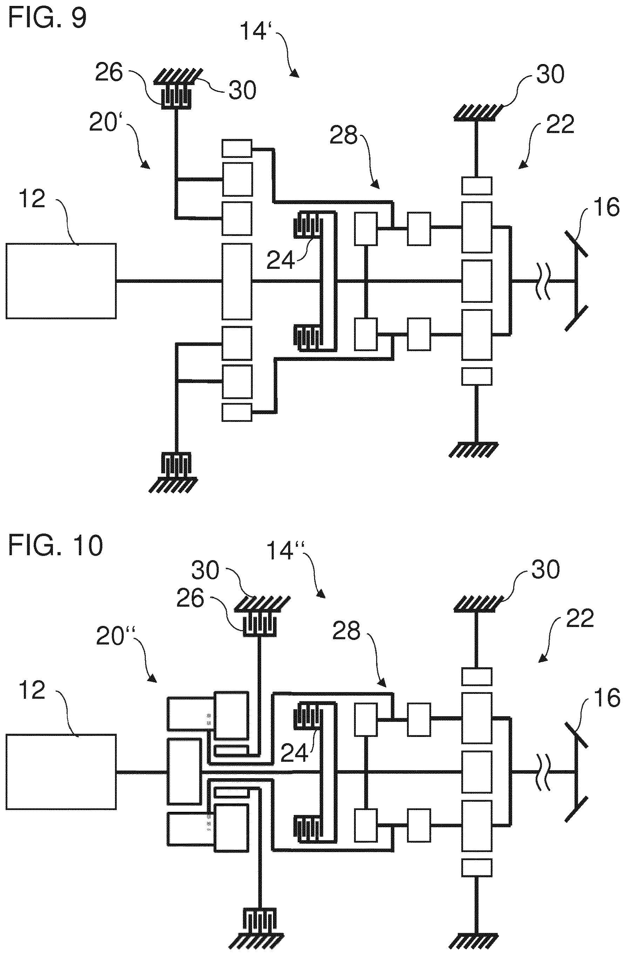

In den Figuren 9 und 10 sind weitere Ausführungsbeispiele für das Lastschaltgetriebe gezeigt. In Figur 9 ist die erste Planetengetriebestufe 20' als Doppelplanetengetriebestufe ausgebildet. In Figur 10 ist die erste Planetengetriebestufe 20" als Ravigneaux-Planetengetriebestufe ausgebildet. Diese und andere Bauformen für die erste und/oder zweite Planetengetriebestufe können beispielsweise verwendet werden, um die Übersetzung flexibler einstellen zu können, die Abhängigkeiten zwischen den Gängen zu reduzieren und/oder die Stufensprünge zwischen den Gängen zu verkleinern.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die Merkmale der Unteransprüche auch unabhängig von sämtlichen Merkmalen des unabhängigen Anspruchs 1 und beispielsweise unabhängig von den Merkmalen bezüglich des Vorhandenseins und der Konfiguration des ersten Lastschaltelements und des Umschaltelements offenbart.

### Bezugszeichenliste

- 10: Antriebsstrang
- 12: Elektromotor
- 14: Lastschaltgetriebe (3-Gang-Getriebe)
- 16: Achsgetriebe
- 18: Räder
- 20: Erste Planetengetriebestufe
- 22: Zweite Planetengetriebestufe
- 24: Erstes Lastschaltelement
- 26: Zweites Lastschaltelement
- 28: Umschaltelement
- 30: Gehäuse
- 32: Sonnenrad
- 34: Planetenrad
- 36: Planetenträger
- 38: Hohlrad
- 40: Sonnenrad
- 42: Planetenrad
- 44: Planetenträger
- 46: Hohlrad
- 114: Lastschaltgetriebe (2-Gang-Getriebe)
- 214: Getriebe (1-Gang-Getriebe)

- A: Erster Antriebspfad
- B: Zweiter Antriebspfad
- C: Dritter Antriebspfad

## Patentansprüche

1. Lastschaltgetriebe (14) für einen Antriebsstrang (10) mit einem Elektromotor (12) eines Kraftfahrzeugs, insbesondere eines Nutzfahrzeugs, aufweisend:
höchstens zwei seriell angeordnete Planetengetriebestufen mit einer ersten Planetengetriebestufe (20) und einer zweiten Planetengetriebestufe (22), wobei ein Sonnenrad (32) der ersten Planetengetriebestufe (20) ein Getriebeeingangselement des Lastschaltgetriebes (14) ausbildet, das an den Elektromotor (12) anbindbar ist, und wobei ein Planetenträger (44) der zweiten Planetengetriebestufe (22) ein Getriebeausgangselement des Lastschaltgetriebes (14) ausbildet, das an ein Achsgetriebe (16) des Antriebsstrangs (10) anbindbar ist;
ein erstes Lastschaltelement (24), das zum selektiven Verbinden der ersten Planetengetriebestufe (20) und der zweiten Planetengetriebestufe (22) über einen ersten Antriebspfad (A) angeordnet ist;
ein zweites Lastschaltelement (26), das zum selektiven Festlegen einer Komponente der ersten Planetengetriebestufe (20) an einem Gehäuse (30) des Lastschaltgetriebes (14) angeordnet ist; und
ein Umschaltelement (28), das zum selektiven Verbinden der ersten Planetengetriebestufe (20) und der zweiten Planetengetriebestufe (22) über einen zweiten Antriebspfad (B) oder einen dritten Antriebspfad (C) angeordnet ist.

2. Lastschaltgetriebe (14) nach Anspruch 1, wobei:
das zweite Lastschaltelement (26) zum selektiven Festlegen eines Hohlrads (38) der ersten Planetengetriebestufe (20) an dem Gehäuse (30) des Lastschaltgetriebes (14) angeordnet ist.

3. Lastschaltgetriebe (1) nach Anspruch 1 oder Anspruch 2, wobei:
das Umschaltelement (28) in einer ersten Schaltstellung die erste Planetengetriebestufe (20) und die zweite Planetengetriebestufe (22) über den zweiten Antriebspfad (B) verbindet; und/oder
das Umschaltelement (28) in einer zweiten Schaltstellung die erste Planetengetriebestufe (20) und die zweite Planetengetriebestufe (22) über den dritten Antriebspfad (C) verbindet; und/oder
das Umschaltelement (28) in einer dritten Schaltstellung, insbesondere einer Neutralstellung, die erste Planetengetriebestufe (20) und die zweite Planetengetriebestufe (22) weder über den zweiten Antriebspfad (B) noch über den dritten Antriebspfad (C) verbindet.

4. Lastschaltgetriebe (14) nach Anspruch 3, wobei:
das Umschaltelement (28) in der dritten Schaltstellung ist, wenn die erste Planetengetriebestufe (20) und die zweite Planetengetriebestufe (22) über den ersten Antriebspfad (A) verbunden sind.

5. Lastschaltgetriebe (14) nach einem der vorherigen Ansprüche, wobei:
der erste Antriebspfad (A) ein Sonnenrad (32) der ersten Planetengetriebestufe (20) mit einem Sonnenrad (40) der zweiten Planetengetriebestufe (22) verbindet.

6. Lastschaltgetriebe (14) nach einem der vorherigen Ansprüche, wobei:
der zweite Antriebspfad (B) einen Planetenträger (36) der ersten Planetengetriebestufe (20) mit einem Sonnenrad (40) der zweiten Planetengetriebestufe (22) verbindet.

7. Lastschaltgetriebe (14) nach einem der vorherigen Ansprüche, wobei:
der dritte Antriebspfad (C) einen Planetenträger (36) der ersten Planetengetriebestufe (20) mit einem Planetenträger (44) der zweiten Planetengetriebestufe (22) verbindet.

8. Lastschaltgetriebe (14) nach einem der vorherigen Ansprüche, wobei:
ein Hohlrad (46) der zweiten Planetengetriebestufe (22) an einem Gehäuse (30) des Lastschaltgetriebes (14) festgelegt ist.

9. Lastschaltgetriebe (14) nach einem der vorherigen Ansprüche, wobei:
das Umschaltelement (28) als eine Doppelklauenkupplung ausgebildet ist

10. Lastschaltgetriebe (14) nach einem der vorherigen Ansprüche, wobei:
das erste Lastschaltelement (24) als eine Lamellenkupplung ausgebildet ist; und/oder
das zweite Lastschaltelement (26) als eine Lamellenbremse ausgebildet ist; und/oder
das Umschaltelement (28) nicht-lastschaltbar ausgebildet ist.

11. Lastschaltgetriebe (14) nach einem der vorherigen Ansprüche, wobei:
das Lastschaltgetriebe (14) konstruktiv zur Schaltung von höchstens drei lastschaltbaren Vorwärtsgängen vorgesehen ist.

12. Lastschaltgetriebe (14) nach einem der vorherigen Ansprüche, wobei:
die erste Planetengetriebestufe (29) und/oder die zweite Planetengetriebestufe (22) als ein Einzelplanetengetriebe, ein Doppelplanetengetriebe, ein Stufenplanetengetriebe oder ein Ravigneaux-Planetengetriebe ausgebildet ist.

13. Modulbausystem, aufweisend:
das Lastschaltgetriebe (14) nach einem der vorherigen Ansprüche, wobei:
das Lastschaltgetriebe (14) modular zum Aufbau eines Getriebes (214) mit einem Vorwärtsgang, eines Getriebes (114) mit zwei lastschaltbaren Vorwärtsgängen und eines Getriebes (14) mit drei lastschaltbaren Vorwärtsgängen vorgesehen ist.

14. Kraftfahrzeug, insbesondere Nutzfahrzeug, aufweisend:
ein Achsgetriebe (16);
ein Lastschaltgetriebe (14) nach einem der Ansprüche 1 bis 12, das antreibend mit dem Achsgetriebe (16) verbunden ist; und
einen Elektromotor (12), der antreibend mit dem Lastschaltgetriebe (14) verbunden ist.

## Claims

1. A powershift transmission (14) for a drivetrain (10), which has an electric motor (12), of a motor vehicle, in particular of a utility vehicle, having:
at most two planetary transmission stages which are arranged in series and which have a first planetary transmission stage (20) and a second planetary transmission stage (22), wherein a sun gear (32) of the first planetary transmission stage (20) forms a transmission input element of the powershift transmission (14), which transmission input element is connectable to the electric motor (12), and wherein a planet carrier (44) of the second planetary transmission stage (22) forms a transmission output element of the powershift transmission (14), which transmission output element is connectable to an axle transmission (16) of the drivetrain (10);
a first powershift element (24) which is arranged for the selective connection of the first planetary transmission stage (20) and the second planetary transmission stage (22) via a first drive path (A);
a second powershift element (26) which is arranged for the selective fixing of a component of the first planetary transmission stage (20) to a housing (30) of the powershift transmission (14); and
a switchover element (28) which is arranged for the selective connection of the first planetary transmission stage (20) and of the second planetary transmission stage (22) via a second drive path (B) or a third drive path (C).

2. The powershift transmission (14) according to Claim 1, wherein:
the second powershift element (26) is arranged for the selective fixing of a ring gear (38) of the first planetary gear stage (20) to the housing (30) of the powershift transmission (14).

3. The powershift transmission (1) according to Claim 1 or 2, wherein:
the switchover element (28), in a first switching position, connects the first planetary transmission (20) and the second planetary transmission (22) via the second drive path (B); and/or
the switchover element (28), in a second switching position, connects the first planetary transmission stage (20) and the second planetary transmission stage (22) via the third drive path (C); and/or
the switchover element (28), in a third switching position, in particular a neutral position, connects the first planetary transmission stage (20) and the second planetary transmission stage (22) neither via the second drive path (B) nor via the third drive path (C).

4. The powershift transmission (14) according to Claim 3, wherein:
the switchover element (28) is in the third switching position when the first planetary transmission stage (20) and the second planetary transmission stage (22) are connected via the first drive path (A).

5. The powershift transmission (14) according to any one of the preceding claims, wherein:
the first drive path (A) connects a sun gear (32) of the first planetary transmission stage (20) to a sun gear (40) of the second planetary transmission stage (22).

6. The powershift transmission (14) according to any one of the preceding claims, wherein:
the second drive path (B) connects a planet carrier (36) of the first planetary transmission stage (20) to a sun gear (40) of the second planetary transmission stage (22).

7. The powershift transmission (14) according to any one of the preceding claims, wherein:
the third drive path (C) connects a planet carrier (36) of the first planetary transmission stage (20) to a planet carrier (44) of the second planetary transmission stage (22).

8. The powershift transmission (14) according to any one of the preceding claims, wherein:
a ring gear (46) of the second planetary transmission stage (22) is fixed to a housing (30) of the powershift transmission (14).

9. The powershift transmission (14) according to any one of the preceding claims, wherein:
the switchover element (28) is in the form of a double dog clutch.

10. The powershift transmission (14) according to any one of the preceding claims, wherein:
the first powershift element (24) is in the form of a multiplate clutch; and/or
the second powershift element (26) is in the form of a multiplate brake; and/or
the switchover element (28) is configured without powershift capability.

11. The powershift transmission (14) according to any one of the preceding claims, wherein:
the powershift transmission (14) is provided, in terms of construction, for the engagement of at most three powershift-capable forward gear ratios.

12. The powershift transmission (14) according to any one of the preceding claims, wherein:
the first planetary transmission stage (29) and/or the second planetary transmission stage (22) is configured as a single planetary transmission, a dual planetary transmission, a multi-stage planetary transmission or a Ravigneaux planetary transmission.

13. A modular system having:
the powershift transmission (14) according to any one of the preceding claims, wherein:
the powershift transmission (14) is provided in modular form for the construction of a transmission (214) with one forward gear ratio, of a transmission (114) with two powershift-capable forward gear ratios, and of a transmission (14) with three powershift-capable forward gear ratios.

14. A motor vehicle, in particular utility vehicle, having:
an axle transmission (16);
a powershift transmission (14) according to any one of Claims 1 to 12, which has a driving connection to the axle transmission (16); and
an electric motor (12), which has a driving connection to the powershift transmission (14).

## Revendications

1. Transmission à commutation de charge (14) destinée à une chaîne cinématique (10) pourvue d'un moteur électrique (12) d'un véhicule automobile, notamment d'un véhicule utilitaire, ladite transmission comportant :
au plus deux étages d'engrenages planétaires disposés en série et comprenant un premier étage d'engrenages planétaires (20) et un deuxième étage d'engrenages planétaires (22), une roue solaire (32) du premier étage d'engrenages planétaires (20) formant un élément d'entrée de la transmission à commutation de charge (14) qui peut être relié au moteur électrique (12), et un porte-satellites (44) du deuxième étage d'engrenages planétaires (22) formant un élément de sortie de la transmission à commutation de charge (14) qui peut être relié à une transmission d'essieu (16) de la chaîne cinématique (10) ;
un premier élément de commutation de charge (24) qui est disposé de manière à relier sélectivement le premier étage d'engrenages planétaires (20) et le deuxième étage d'engrenages planétaires (22) par le biais d'un premier chemin d'entraînement (A) ;
un deuxième élément de commutation de charge (26) qui est disposé de manière à fixer sélectivement un composant du premier étage d'engrenages planétaires (20) à un boîtier (30) de la transmission à commutation de charge (14) ; et
un élément de commutation (28) qui est disposé de manière à relier sélectivement le premier étage d'engrenages planétaires (20) et le deuxième étage d'engrenages planétaires (22) par le bais d'un deuxième chemin d'entraînement (B) ou d'un troisième chemin d'entraînement (C).

2. Transmission à commutation de charge (14) selon la revendication 1 :
le deuxième élément de commutation de charge (26) étant disposé de manière à fixer sélectivement une roue à denture intérieure (38) du premier étage d'engrenages planétaires (20) sur le boîtier (30) de la transmission à commutation de charge (14).

3. Transmission à commutation de charge (1) selon la revendication 1 ou la revendication 2 :
l'élément de commutation (28) reliant, dans une première position de commutation, le premier étage d'engrenages planétaires (20) et le deuxième étage d'engrenages planétaires (22) par le biais du deuxième chemin d'entraînement (B) ; et/ou
l'élément de commutation (28) reliant, dans une deuxième position de commutation, le premier étage d'engrenages planétaires (20) et le deuxième étage d'engrenages planétaires (22) par le biais du troisième chemin d'entraînement (C) ; et/ou
l'élément de commutation (28) ne reliant, dans une troisième position de commutation, en particulier une position neutre, le premier étage d'engrenages planétaires (20) et le deuxième étage d'engrenages planétaires (22) ni par le biais du deuxième chemin d'entraînement (B) ni par le biais du troisième chemin d'entraînement (C).

4. Transmission à commutation de charge (14) selon la revendication 3 :
l'élément de commutation (28) étant dans la troisième position de commutation lorsque le premier étage d'engrenages planétaires (20) et le deuxième étage d'engrenages planétaires (22) sont reliés par le biais du premier chemin d'entraînement (A).

5. Transmission à commutation de charge (14) selon l'une des revendications précédentes :
le premier chemin d'entraînement (A) reliant une roue solaire (32) du premier étage d'engrenages planétaires (20) à une roue solaire (40) du deuxième étage d'engrenages planétaires (22).

6. Transmission à commutation de charge (14) selon l'une des revendications précédentes :
le deuxième chemin d'entraînement (B) reliant un porte-satellites (36) du premier étage d'engrenages planétaires (20) à une roue solaire (40) du deuxième étage d'engrenages planétaires (22).

7. Transmission à commutation de charge (14) selon l'une des revendications précédentes : le troisième chemin d'entraînement (C) reliant un porte-satellites (36) du premier étage d'engrenages planétaires (20) à un porte-satellites (44) du deuxième étage d'engrenages planétaires (22).

8. Transmission à commutation de charge (14) selon l'une des revendications précédentes :
une roue à denture intérieure (46) du deuxième étage d'engrenages planétaires (22) étant fixée à un boîtier (30) de la transmission à commutation de charge (14).

9. Transmission à commutation de charge (14) selon l'une des revendications précédentes :
l'élément de commutation (28) étant conçu comme un embrayage à double griffe.

10. Transmission à commutation de charge (14) selon l'une des revendications précédentes :
le premier élément à commutation de charge (24) étant conçu comme un embrayage multidisque ; et/ou
le deuxième élément de commutation de charge (26) étant conçu comme un frein multidisque ; et/ou
l'élément de commutation (28) n'étant pas conçu à commutation de charge.

11. Transmission à commutation de charge (14) selon l'une des revendications précédentes :
la transmission à commutation de charge (14) étant conçue pour commuter au maximum trois vitesses avant à commutation de charge.

12. Transmission à commutation de charge (14) selon l'une des revendications précédentes :
le premier étage d'engrenages planétaires (29) et/ou le deuxième étage d'engrenages planétaires (22) étant conçus sous la forme d'un engrenage planétaire simple, d'un engrenage planétaire double, d'un engrenage planétaire à étages ou d'un engrenage planétaire Ravigneaux.

13. Système à construction modulaire, comportant :
la transmission à commutation de charge (14) selon l'une des revendications précédentes :
la transmission à commutation de charge (14) étant prévue de manière modulaire pour élaborer une transmission (214) avec une vitesse avant, une transmission (114) avec deux vitesses avant à commutation de charge et une transmission (14) avec trois vitesses avant à commutation de charge.

14. Véhicule automobile, notamment véhicule utilitaire, comportant :
un entraînement d'essieu (16) ;
une transmission à commutation de charge (14) selon l'une des revendications 1 à 12, qui est reliée en entraînement à la transmission d'essieu (16) ; et
un moteur électrique (12) qui est relié en entraînement à la transmission à commutation de charge (14) .
